# EUROPEAN PATENT APPLICATION

(11) **EP 1 056 028 A2**
(43) Date of publication of application: **29.11.2000**
(21) Application number: 00111206.9
(22) Date of filing: 24.05.2000
(51) Int. Cl.: G06F 17/60

(54) **Environmental assessment system**

(30) Priority: 26.05.1999 JP 14571899
(71) Applicant: MATSUSHITA ELECTRIC INDUSTRIAL CO., LTD., Kadoma-shi, Osaka 571-8501 (JP)
(72) Inventor: Sato, Shigehiro, Kusatsu-shi, Shiga 525-0045 (JP); Watanabe, Masahiro, Otsu-shi, Shiga 520-2143 (JP); Tokura, Makiko, Otsu-shi, Shiga 520-2101 (JP)
(74) Representative: Grünecker, Kinkeldey, Stockmair & Schwanhäusser Anwaltssozietät

(57) **Abstract**

An object of the present invention is to relieve the burden on a designer in conducting an environmental assessment in the design stage of a product. There is provided an environmental assessment system comprising a first database retaining information specific to the product regarding the component part name, part specific code, material name, weight and constituent chemical substance of each part of at least two or more products, and a second database having environmental load information, wherein a matched code between products is selected by using the part specific code as a key, the burden on creating database is lightened by commonly utilizing information on other than the part code, and the environmental load information on the product is displayed.

## Description

### Field of the Invention

The present invention relates to a system for automatically assessing the environmental load such as an environmental load substance in raw materials of a product to be designed.

### Background Art

In the field of designing the household electric appliances such as a television, a refrigerator, an air-conditioner, and a washing machine, or the information related apparatuses such as a personal computer, a printer, and a portable telephone, pre-assessment of the environmental influence has been required, and various kinds of assessment systems or methods have been proposed.

For example, in Japanese Patent Laid-Open No. 7-311792, there was disclosed an environmental assessment system equipped with a device which allows the assessment of assembly or disassembly phase in a three dimensional CAD (Computer Aided Design) system, and further a life cycle assessment (hereinafter referred to as "LCA") for forecasting the environmental load of a product to be designed. This environmental assessment system can automatically assess the environmental load of the product or the easiness of assembling or disassembling, based on the design information created using the CAD system, and with a relational database.

Note that the LCA assessment is to conduct the inventory analysis of energy consumption or CO₂ discharge over the whole life cycle of various stages from the material of product to its use and dumping, as well as the impact assessment for the global warming, acid rain or atmospheric pollution by weighing the results of the inventory analysis.

Also, in Japanese Patent Laid-Open No. 10-49587, there was disclosed a design support device capable of easily determining the propriety of recycling of each part at the design stage. This design support device can determine the propriety of recycling of each part and the recycle attributes with reference to a recycle database containing the knowledge data regarding the recyclable material or decomposition for the configuration data of parts, and can display on the drawing the results of determining the propriety of recycling of each part with the color or shading treatment.

One method of assessing the environmental influence at the stage of design is to assess the assembly or disassembly phase and the LCA in the three dimensional CAD system, as described in Japanese Patent Laid-Open No. 7-311792.

However, in order to conduct the environmental load assessment with the environmental assessment system as above described, the designer must input quite a large amount of data in designing the product, which results in a problem of imposing a large burden on the designer.

The present invention can resolve the above-mentioned problem, and provides an environmental assessment system which can relieve the burden on the designer in conducting the environmental load assessment at the design stage of the product.

### Summary of the Invention

An environmental assessment system of the present invention is characterized by the special constitution of an operation unit.

According to the present invention, it is possible to reduce input data at the design stage of a product and lighten a burden on a designer.

An environmental assessment method according to claim 1 of the present invention is characterized by comprising, in designing a new product using a first database having at least a part specific code and a component part name for each part constituting an already designed product, and a second database having load information on environmental load chemical substance, creating a bill of input parts for the new product by inputting the part specific code for each part constituting the new product, which is not registered into the first database, retrieving the first database by the part specific code in the bill of input parts as a retrieval key to locate a matched code, reading information on the matched code from the first database and filling at least a constituent chemical substance name in a blank column of a corresponding part in the bill of input parts to create a bill of parts for environmental assessment, and retrieving the second database by the constituent chemical substance name of each part in the bill of parts for environmental assessment after filling data, as a retrieval key to assess environmental load of the new product.

An environmental assessment system according to claim 2 of the present invention is characterized by comprising a first database having at least a part specific code and a component part name for each part constituting an already designed product, a second database having load information on environmental load chemical substance, a bill of input parts having been input with the part specific code for each part constituting a new product, which is not registered into the first database, and an operation unit for retrieving the first database by the part specific code in the bill of input parts as a retrieval key to locate a matched code, reading information on the matched code from the first database and filling at least a constituent chemical substance name in a blank column of the corresponding part in the bill of input parts to create a bill of parts for environmental assessment, and retrieving the second database by the constituent chemical substance name of each part in the bill of parts for environmental assessment after filling data, as a retrieval key to assess environmental load of the new product.

An environmental assessment method according to claim 3 of the present invention is characterized by comprising, in designing a new product using a second database having load information on environmental load chemical substance, and a third database having at least a part specific code and a constituent chemical substance name, creating a bill of input parts for the new product by inputting the part specific code constituting the new product into a first database, retrieving the third database by the part specific code in the bill of input parts as a retrieval key to locate a matched code, reading information on the matched code from the third database and filling at least the constituent chemical substance name in a blank column of a corresponding part in the bill of input parts to create a bill of parts for environmental assessment, and retrieving the second database by the constituent chemical substance name of each part in the bill of parts for environmental assessment after filling data, as a retrieval key to assess environmental load of the new product.

An environmental assessment system according to claim 4 of the present invention is characterized by comprising a second database having load information on environmental load chemical substance, a third database having at least a part specific code and a constituent chemical substance name, a bill of input parts for a new product created by inputting the part specific code of each part constituting the new product into a first database, and an operation unit for retrieving the third database by the part specific code in the bill of input parts as a retrieval key to locate a matched code, reading the information on the matched code from the third database and filling at least the constituent chemical substance name in a blank column of the corresponding part in the bill of input parts to create a bill of parts for environmental assessment, and retrieving the second database by the constituent chemical substance name of each part in the bill of parts for environmental assessment after filling data, as a retrieval key to assess environmental load of the new product.

An environmental assessment system according to claim 5 of the present invention is characterized in that the output of the environmental assessment system is displayed in a table format, the parts containing at least the environmental load chemical substance in this table being identified by color, density or flash.

An environmental assessment system according to claim 6 of the present invention is characterized in that the output of the environmental assessment system is displayed on design drawings, the parts containing the environmental load chemical substance being identified by color, density or flash.

An environmental assessment system according to claim 7 of the present invention is characterized in that the environmental assessment is displayed on the design drawings while being linked with a CAD system.

An environmental assessment system according to claim 8 of the present invention is characterized in that it creates a bill of parts for environmental assessment by filling at least the constituent chemical substance name in the blank column of the corresponding part in the bill of input parts via a network from outside by the part specific code in the bill of input parts created as a retrieval key.

An environmental assessment method according to claim 9 of the present invention is characterized by comprising, in conducting the environmental assessment of waste matter in dismantling, connecting an operation unit for assessing the environmental load of the product with the first database, the second database and the third database via a network, and retrieving the second database via the network by the constituent chemical substance name of each part as a retrieval key to assess the environmental load of the product.

An environmental assessment method according to claim 10 of the present invention is characterized by comprising, in conducting the environmental assessment of waste matter in dismantling, reading the information identified and displayed for the parts containing at least an environmental load chemical substance via a network from outside to assess the environmental load.

An environmental assessment method according to claim 11 of the present invention is characterized by comprising being able to read or change the information on at least any one of the first database, the second database and the third database via a network from outside.

Brief Description of the Drawings
FIG. 1 is a block diagram of an environmental assessment system in an embodiment 1;
FIG. 2 is a flow chart showing the creation of a database in an example 1;
FIG. 3 is a flow chart showing the environmental assessment in the example 1;
FIG. 4 is a block diagram of an environmental assessment system in an embodiment 2;
FIG. 5 is a flow chart showing an environmental assessment method in an example 2;
FIG. 6 is a block diagram of an environmental assessment system in an embodiment 3;
FIG. 7 is a flow chart showing an environmental assessment method in an example 3; and

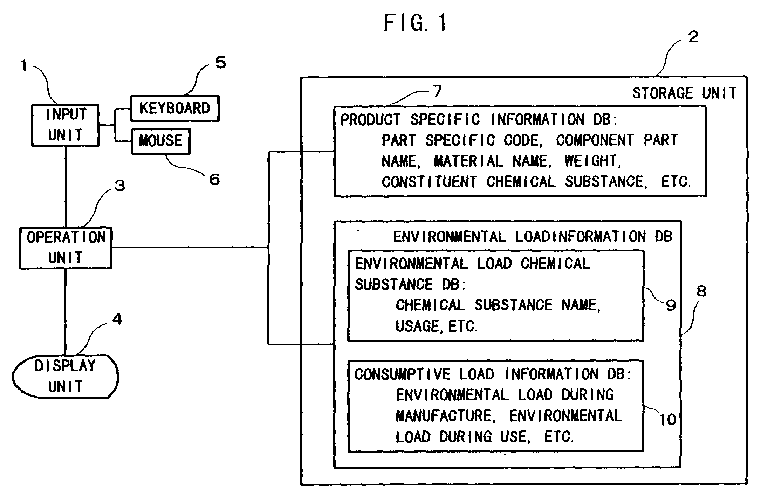

The embodiments of the present invention will be described below with reference to FIGS. 1 to 5.

### Embodiment 1

FIGS. 1 to 3 show an embodiment 1 of the present invention.

FIG. 1 shows the configuration of an environmental assessment system in the embodiment 1.

The environmental assessment system has substantially the same configuration as a personal computer system typically used, comprising an input unit 1 for inputting data from the outside, a storage unit 2 which has stored data, an operation unit 3 for operating the information which is read from the storage unit 2, and a display unit 4 for displaying the results of operation, but in this embodiment 1, particularly the operation unit 3 has a specific configuration.

More specifically, the input unit 1 may be typically a keyboard 5 or a mouse 6.

The storage unit 2 is comprised of a product specific information database 7 (hereinafter abbreviated to as a DB ) as a first database having at least a part specific code and a component part name for each part constituting the designed product and an environmental load information DB 8 as a second database having the information relating to the environmental load of the product.

The product specific information DB 7 is necessary to hold the information regarding at least the part specific code and the component part name, and in addition, can hold the product specific information including the material name, weight, and constituent chemical substance.

The environmental load information DB 8 consists of an environmental load chemical substance DB 9 containing the information regarding the name, content and usage of the environmental load chemical substance for each material, and a consumptive load information DB 10 containing the environmental load information derived from the power source such as electric power, gas or petroleum which is consumed during the manufacture or use.

The environmental load chemical substance DB 9 stores the information regarding the substances which may have a load on the human body and the substances which may have a load on the environment by being released to the water or atmosphere, as well as the degree of that load. It is preferable that the environmental load is classified in accordance with the degree of the load, for example, at three stages A, B and C in the order of the larger degree of load, for the convenience of accumulation. The substances laid on this environmental load chemical substance DB 9 may preferably include the substances which are under the regulations of the law and the substances which are carcinogenic to the human body, for example, and more preferably, the environmental loads should be subclassified in accordance with the name and usage of the environmental load chemical substance.

Note that the consumptive load information DB 10 created by the information regarding the environmental load during the manufacture and the information regarding the environmental load during the use of this product may be contained in the product specific information DB 7.

DB may be a commercially available DB software such as a relational database software, trade name ACCESS (manufactured by Microsoft, registered trade mark), or more simply may be a work sheet such as a spreadsheet program, trade name Excel (manufactured by Microsoft, registered trade mark).

A specific example of assessing the environmental load of a new product when designing the new product using the first DB and the second DB in the environmental assessment system as configured above will be described below.

### Example 1

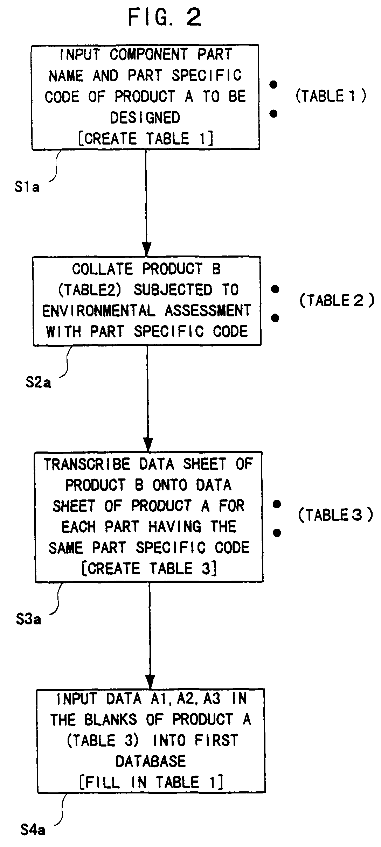

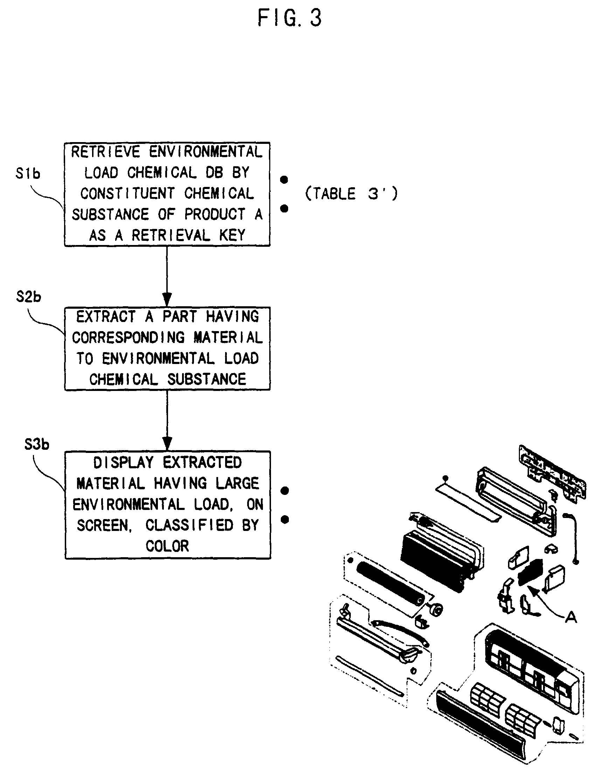

FIGS. 2 and 3 show an example 1 of the present invention.

This example involves designing an indoor unit of an air conditioner of model A-type (hereinafter referred to as product A) as a new product.

As shown in FIG. 2, in step S1a, a bill of input parts as shown in table 1 is created by inputting the part specific code and the component part name of product A into the product specific information DB 7.

In step S2a, a bill of parts (table 2) for an indoor unit of the air conditioner of model B-type (hereinafter referred to as product B) registered in the product specific information DB 7 and subjected to the environmental assessment beforehand, and the bill of input parts (table 1) input in step S1a are collated by the part specific code as a retrieval key, to locate a matched code.

In step S3a, the information on the part having the same part specific code in table 1 and table 2 is read from the product specific information DB 7, and transcribed to a blank column of the corresponding part in the bill of input parts which is table 1 to create a bill of parts as shown in table 3.

In step S4a, the designer inputs data A1, A2, A3 in the blank columns of table 3 into the product specific information DB 7 to complete the bill of parts for product A.

In this way, the designer is only required to fill in the blanks of table 3 in designing the product A, and is unnecessary to enter data again for the common parts between product A and product B, relieving the burden of input. To clearly exhibit the blanks to be entered, it is preferred that the blanks or input rows are distinguished by color, flash or density.

For the part specific code in the product specific information DB 7, the child part is preferably indented with respect to the parent part, to exhibit the relation between the parent part and the child part. Thus, for the indented parts, it is necessary to ignore the indent portion, thereby making comparison between product A and product B based on the part code itself. Such a processing can be easily implemented with a program language such as Visual Basic manufactured by Microsoft.

Then, the environmental assessment can be performed, as shown in FIG. 3, using the bill of parts which has held data.

In step S1b, the environmental load information DB 8 is retrieved by the constituent chemical substance name of each part in the bill of parts (table 3) for product A which has tilled data in step S4a as a retrieval key, to assess the environmental load. The environmental load chemical substance DB 9 in the environmental load information DB 8 stores the chemical substance names and their usage.

In step S2b, the part the name of which is coincident with the environmental load chemical substance name in the environmental load chemical substance DB 9 is selected, and the part having the material corresponding to the environmental load chemical substance is extracted.

In step S3b, the extracted materials are classified according to the usage, and if there is any material having a large environmental load, instructions are given by the designer to identify and display this part, whereby, the extracted parts containing the environmental load chemical substance are displayed in the exploded view of product on the display unit 4, classified by color or flash according to the environmental load substance, as shown in an exploded view beside step S3b. Herein, since the constituent chemical substance of a printed circuit board contains lead which is a hazardous matter, the printed circuit board A is displayed in red color, for example.

In this way, the designer can easily recognize the parts, owing to the display with identification, and design the product to have a small environmental load.

Also, the data of the part containing this environmental load chemical substance may be linked with a three-dimensional CAD to grasp the position of the part containing the environmental load chemical substance on the CAD.

As shown in FIGS. 2 and 3, if the environmental assessment is conducted for the product to be designed, it is necessary to delete the data input into the product specific information DB 7 which is the first DB in step S4a, or data in the table 3 herein, in designing the subsequent product, to increase the capacity of the first DB ,

And in designing another product, the same operation of FIGS. 2 and 3 can be repeated to make the design of product.

While the product specific information DB 7 which is the first DB , or the table 3 which is created by collating table 1 and table 2, is deleted every time to lighten the DB in the above explanation, it will be appreciated that the created table 3 may be accumulated in the first DB to utilize the information on this table 3 in designing another product.

### Embodiment 2

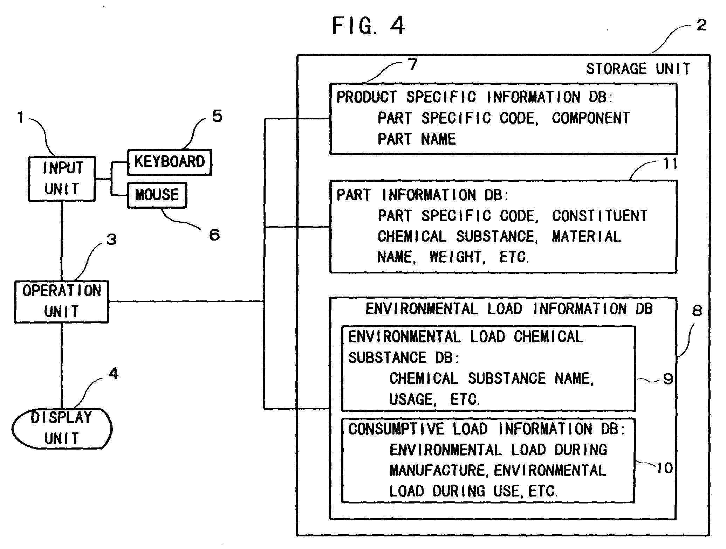

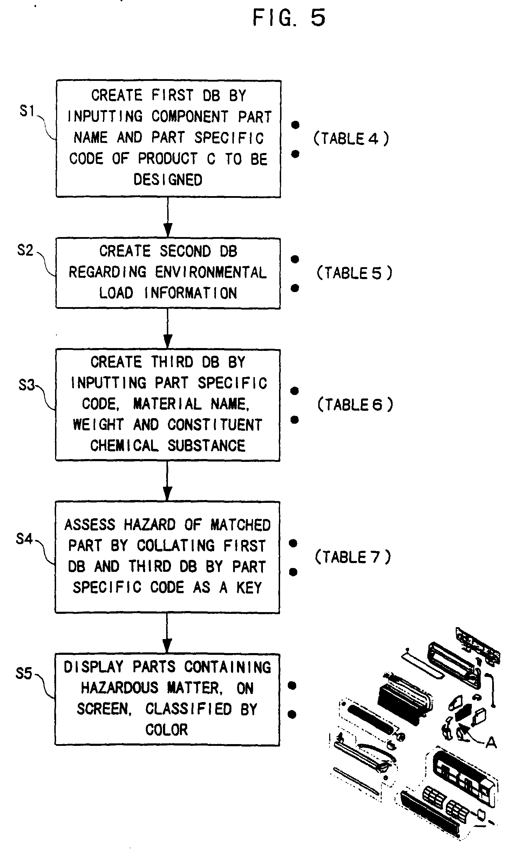

FIGS. 4 and 5 show an embodiment 2 of the present invention.

This embodiment 2 is different from the embodiment 1 in that only the part specific code and the component part name is held in the product specific information DB 7 which is the first DB , and further the part information DB 11 is provided as the third DB , but they are the same in respect of the other configuration.

More specifically, the product specific information DB 7 only holds the part specific code and the component part name.

By lightening the product specific information DB 7 in the above way, it is unnecessary to retain the part information and the environmental load information in the product specific information DB 7, and in making minor changes of the product, the reconfiguration of DB can be effected only for the product specific information DB , so that the change of DB can be reduced to the minimum.

The part information DB 11 may contain the part specific code, the constituent chemical substance name, the material name, and the weight.

When this part information DB 11 is independent, the part maker may input the data at the delivery of parts, thereby providing the latest information. Also, this part information DB 11 may be linked with the database on the side of the parts maker to take in the parts information by the part specific code as a retrieval key.

With such a configuration, the manufacturer is relieved from the burden, resulting in less data input error. Further, the electronic commercial transaction in the future can be also dealt with.

A specific example of assessing the environmental load of a new product, in designing the new product using the environmental assessment system as constituted in this way, will be described below.

### Example 2

FIG. 5 shows an example 2 of the present invention.

This example involves designing an indoor unit of the air conditioner of model C-type (hereinafter referred to as product C), for example, as a new product.

As shown in FIG. 5, in step S1, a bill of input parts as shown in table 4 is created by inputting the part specific code and component part name of product C into the product specific information DB 7 via an input unit 1.

In step S2, an environmental load chemical substance data sheet as shown in table 5 is created by inputting the information regarding the environmental load information such as the chemical substance name and its usage, and the grade-mark of hazard, for example, into the environmental load information DB 8. Herein, a consumptive load information DB 10 may be created to record the environmental load derived from the power source such as electric power, gas or petroleum which is consumed during the manufacturing process of parts or product as the environmental load information.

In step S3, a part information data sheet as shown in table 6 is created by inputting the part specific code, material name, weight, and constituent chemical substance into the part information DB 11.

In step S4, the product specific information DB 7 and the part information DB 11 are collated by the part specific code as a retrieval key to locate a matched code, the information on the matched code is read from the part information DB 11 and at least the constituent chemical substance name is filled in a blank column of the corresponding part in the bill of input parts to create a bill of parts for environmental assessment.

And the environmental load information DB 8 is retrieved by the constituent chemical substance name of each part in the bill of parts for environmental assessment after filling data as a retrieval key, to grade the hazard of the constituent chemical substance as shown in table 7.

In the case where there is any component part containing the hazardous matter having a large environmental load, the operator can change a display switch to display on the screen the part containing the hazardous matter, or herein a printed circuit board A, in red color, for example, when displaying an exploded view of product which is shown beside step S5 on the display unit 4.

Further, the data of the part containing this environmental load chemical substance may be linked with a three dimensional CAD to grasp the location of the part containing the environmental load chemical substance in the three dimension on the CAD.

If the environmental assessment for the product to be designed has been conducted, as shown in FIG. 5, the data input into the product specific information DB 7 in step S4, or herein the table 7, is deleted to increase the capacity of the product specific information DB 7.

And in designing another new product, the above process of FIG. 5 can be repeated to achieve the design of product.

While the table created in the product specific information DB 7 is deleted every time of designing a new product, to leave the part specific code and the component part name in the first DB at any time, in the above description, it will be appreciated that when there is a large capacity of DB , the table created may be accumulated in the first DB .

Also, while the part containing the environmental load substance is displayed as an image, classified by color in the above embodiments, this invention is not limited thereto, and the part may be identified by density or flashing additionally.

While the environmental load substance or reproducible material could be identified in the exploded view as the output of the environmental assessment system, it will be appreciated that the output of the environmental assessment system may be presented in the table format, and similarly can be identified by color, density or flashing.

Also, while the switching of display into the image in displaying the part containing the environmental load substance on the display unit was conducted by the operator who depresses a button of assessment in making assessment, it will be understood that the image may automatically appear after filling in the blanks of the table.

Also, the environmental load information DB 8 may have DB of LCA (Life Cycle Assessment), besides the environmental load information DB 9 and the consumptive load information DB 10. To incorporate the LCA assessment, the database regarding the original unit of LCA is required.

The environmental load information may involve a recycle DB for storing the kind and reproduction ratio of reproduced material, and the profit on sale of reproduced material, in accordance with the recycle method, such as manual dismantling, shredder, a combination of manual dismantling and shredder.

### Embodiment 3

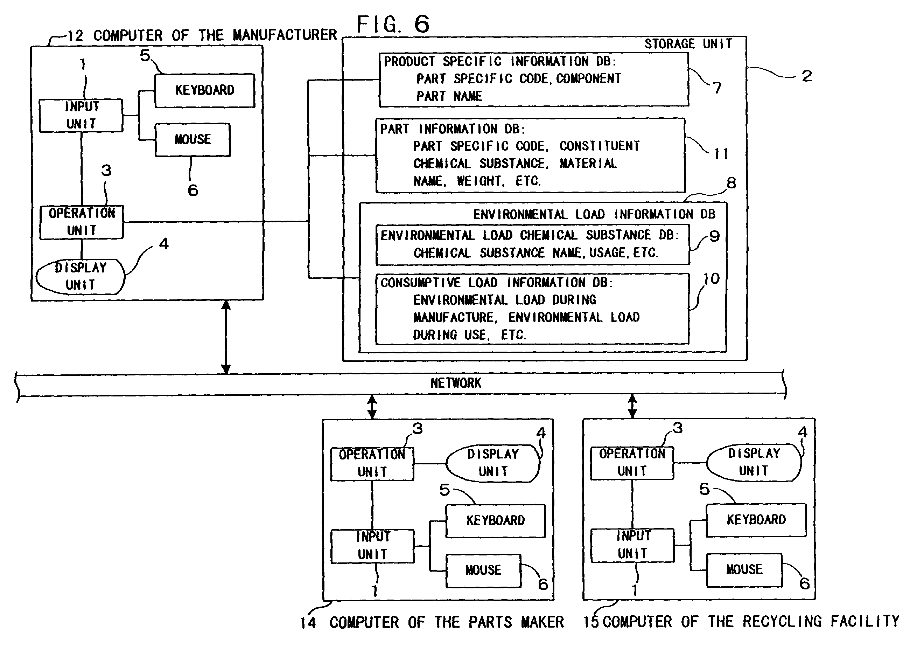

FIG. 6 shows an embodiment 6 of the present invention.

While all the information is input from the computer terminal of the manufacturer to create the first DB 7, the second DB 8, and the third DB 11 as shown in table 4, table 5 and table 6 to assess the hazard for the component parts of product C, in the above embodiment 2, it should be noted that in this embodiment 3, some information is input from a terminal of a computer 12 of the manufacturer, and the remaining information is input from a terminal of a computer 14 of the parts maker which supplies the parts to the manufacturer into a storage unit 2. Also, a computer 15 of the external recycling facility can read and utilize not only the information input from the outside into the storage unit 2, but also the information on the product which is assessed to be hazardous.

Specifically, the computer 14 of the parts maker and the computer 15 of the recycling facility at the remote places are accessibly connected to the storage unit 2 of the computer 12 in the manufacturer via a network 13 using the communication channel such as LAN (Local Area Network), WAN (Wide Area Network), internet, or telephone line, whereby various kinds of operations can be implemented via the network from the remote places by referring to or updating the data in the storage unit 2 while sharing the data.

### Example 3

In designing or recycling the product C, the computer 12 of the manufacturer (air-conditioner maker) configured like the example 2 is connected to the computer 14 of the parts maker and the computer 15 of the recycling facility via the network 13, or herein on the LAN, and has remote access to the DB to input or read the information directly.

The computer 14 of the parts maker and the computer 15 of the recycling facility are provided with an input unit 1 and a display unit 4 which enable remote operation of the storage unit 2, the input unit 1 being comprised of a keyboard 5 and a mouse 6. Each maker is provided with a storage unit, not shown herein. Reference numeral 3a denotes an operation unit of the computer 14 for the parts maker, and reference numeral 3b denotes an operation unit of the computer 15 for the recycling facility.

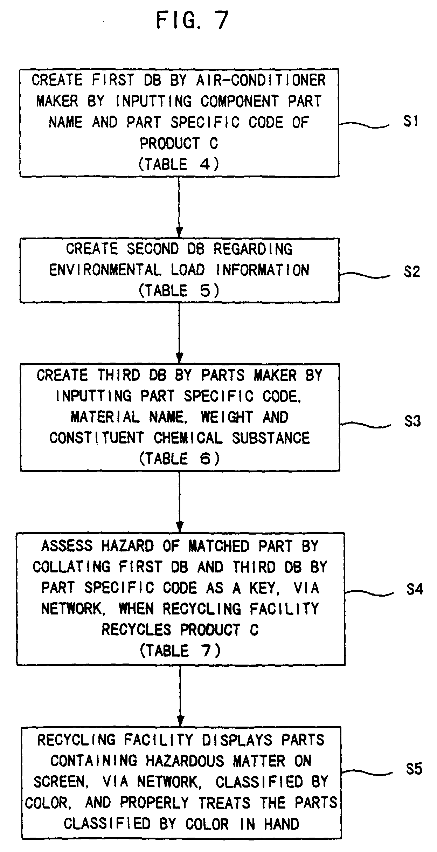

In step S1 as shown in FIG. 7, the component part name and part specific code of product D are input via the input unit 1 from the computer 12 of the air-conditioner maker into the product specific information DB 7 to create a bill of input parts as listed in table 4.

In step S2, the information regarding the environmental load information is input into the environmental load information DB 8 from the computer 12 of the air-conditioner maker to create an environmental load chemical substance data sheet as shown in table 5. Herein, a consumptive load information DB may be created to record the information on the environmental load derived from the power source such as electric power, gas, or petroleum which is consumed during the manufacturing process of parts or product.

In step S3, the computer 14 of the parts maker makes access to the storage unit 2 via the network 13 to input the information on parts such as the material name, weight, and constituent chemical substance by the part specific code as a retrieval key, and to create a parts information data sheet as shown in table 6.

In this way, inputting some information directly from the computer 14 of the parts maker can not only enhance the reliability of data, but also reduce the input operation of data from the computer 12 of the manufacturer, resulting in increased workability.

In the recycle operation of product C, the processings in step S4 and step S5 are performed by the computer 15 of the recycling facility.

In step S4, the computer 15 of the recycling facility makes access to the storage unit 2 via the network 13 to collate the product specific information DB 7 and the part information DB 11 by the part specific code as a retrieval key to assess the hazard for the matched part, and creates a bill of parts for environmental assessment as shown in table 7.

In step S5, the parts containing the hazardous matter are classified by color and displayed on the screen in the exploded view, like the example 2, using the bill of parts for environmental assessment, to process properly the parts at hand.

With such a configuration, the component parts containing the substance having a large environmental load of the product to be dismantled can be immediately determined via the network 13 to allow for the proper processing.

While the computer 15 of the recycling facility creates the bill of parts for environmental assessment (table 7) and displays the parts containing the hazardous matter on the screen, classified by color, in steps S4 and S5, it will be appreciated that the computer 12 of the manufacturer may perform the process up to creating the bill of parts for environmental assessment, and the computer 15 of the recycling facility may make access to the storage unit 2 to read this information, when disassembling the product.

While the storage unit 2 is provided in the computer 12 of the air-conditioner maker and accessed from the outside in the above description, it can be understood that the storage unit 2 itself may be located in the computer 14 of the parts maker, the computer 15 of the recycling facility or other sites.

While the computer 12 of the air-conditioner maker is used to input information into the environmental load chemical substance DB 9 which is the second DB in step S2 in the above description, it can be understood that the environmental load information can be directly input from the computer 14 of the parts maker at remote site by making remote access through LAN, to enhance the data reliability of the environmental load information.

While the parts maker inputs the parts information in the process in step S3 in the above description, it can be understood that the parts maker may have direct access to the second DB to input the parts information, when delivering the parts, for example, thereby providing the latest information. Also, the parts information DB 11 can be linked with the database on the side of the parts maker to take in the parts information by the part specific code as a retrieval key.

Further, while the environmental assessment system as constituted like the embodiment 2 was described in the above, it will be appreciated that the environmental assessment system as constituted like the embodiment 1 can be similarly applied.

An environmental assessment method of the present invention as above described comprises, in designing a new product using a first database having at least a part specific code and a component part name for each part constituting the designed product and a second database having the load information on environmental load chemical substance, creating a bill of input parts for the new product by inputting the part specific code for each part constituting the new product which is not registered into the first database, retrieving the first database by the part specific code in the bill of input parts as a retrieval key and locating a matched code, reading the information on the matched code from the first database and filling at least a constituent chemical substance name in a blank column of the corresponding part in the bill of input parts to create a bill of parts for environmental assessment, and retrieving the second database by the constituent chemical substance name of each part in the bill of parts for environmental assessment after filling data as a retrieval key to assess the environmental load of the new product, whereby the parts having the same part specific code can share other data to lighten the burden for creating the database. Thereby, the designer can easily recognize the environmental load substance to reduce the environmental load.

Also, an environmental assessment system according to the present invention provides a first database having at least a part specific code and a component part name for each part constituting the designed product, a second database having the load information on environmental load chemical substance, a bill of input parts having input the part specific code for each part constituting a new product which is not registered into the first database, and an operation unit for retrieving the first database by the part specific code in the bill of input parts as a retrieval key to locate a matched code, reading the information on the matched code from the first database and filling at least a constituent chemical substance name in a blank column of the corresponding part in the bill of input parts to create a bill of parts for environmental assessment, and retrieving the second database by the constituent chemical substance name of each part in the bill of parts for environmental assessment after filling data as a retrieval key to assess the environmental load of the new product, whereby the first database is lightened, unnecessary to retain the parts information and the environmental load information therein, and is only subjected to the reconstruction of DB when making minor changes of the product, resulting in the minimum changes of the database.

Also an environmental assessment method according to the present invention comprises, in designing a new product using a second database having the load information on environmental load chemical substance, and a third database having at least a part specific code and a constituent chemical substance name, creating a bill of input parts for the new product by inputting the part specific code constituting the new product into the first database, retrieving the third database by the part specific code in the bill of input parts as a retrieval key to locate a matched code, reading the information on the matched code from the third database and filling at least a constituent chemical substance name in a blank column of the corresponding part in the bill of input parts to create a bill of parts for environmental assessment, and retrieving the second database by the constituent chemical substance name of each part in the bill of parts for environmental assessment after filling data as a retrieval key to assess the environmental load of the new product, whereby the information regarding the material name, weight and constituent chemical substance of the part is not required for each product, resulting in the reduced save area of database, and reduced burden for creating the database.

Also, an environmental assessment system according to the present invention provides a second database having the load information on environmental load chemical substance, a third database having at least a part specific code and a constituent chemical substance name, a bill of input parts having input the part specific codes constituting a new product into the first database, and an operation unit for retrieving the third database by the part specific code in the bill of input parts as a retrieval key to locate a matched code, reading the information on the matched code from the third database and filling at least the constituent chemical substance name in a blank column of the corresponding part in the bill of input parts to create a bill of parts for environmental assessment, and retrieving the second database by the constituent chemical substance name of each part in the bill of parts for environmental assessment after filling data as a retrieval key to assess the environmental load of the new product, whereby the first database is lightened, and only required to change in designing the new product, so that there is no trouble of updating the database other than the first database.

Also an environmental assessment system according to the present invention has the output of the environmental assessment system displayed in the table format or on the exploded view, the parts containing the environmental load chemical substance in this table or on the exploded view being identified by color, density or flashing, whereby the designer can easily recognize them to relieve the environmental load.

Also an environmental assessment system according to the present invention allows a bill of input parts of a new product to be created via a network, wherein the parts maker can perform the input operation of data to provide the enhanced reliability of data.

Also an environmental assessment system of the present invention allows the environmental load of a product to be assessed via a network, whereby the third party such as the recycle dealer can grasp the environmental load of the product, proceeding with the proper processing of the parts having the high environmental load.

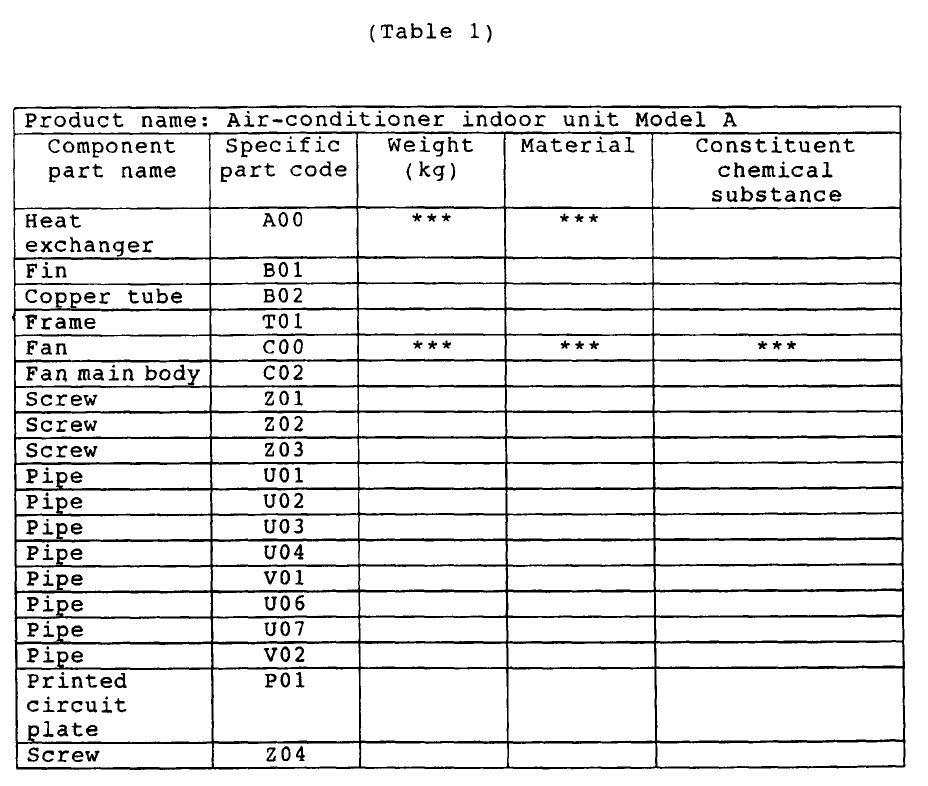

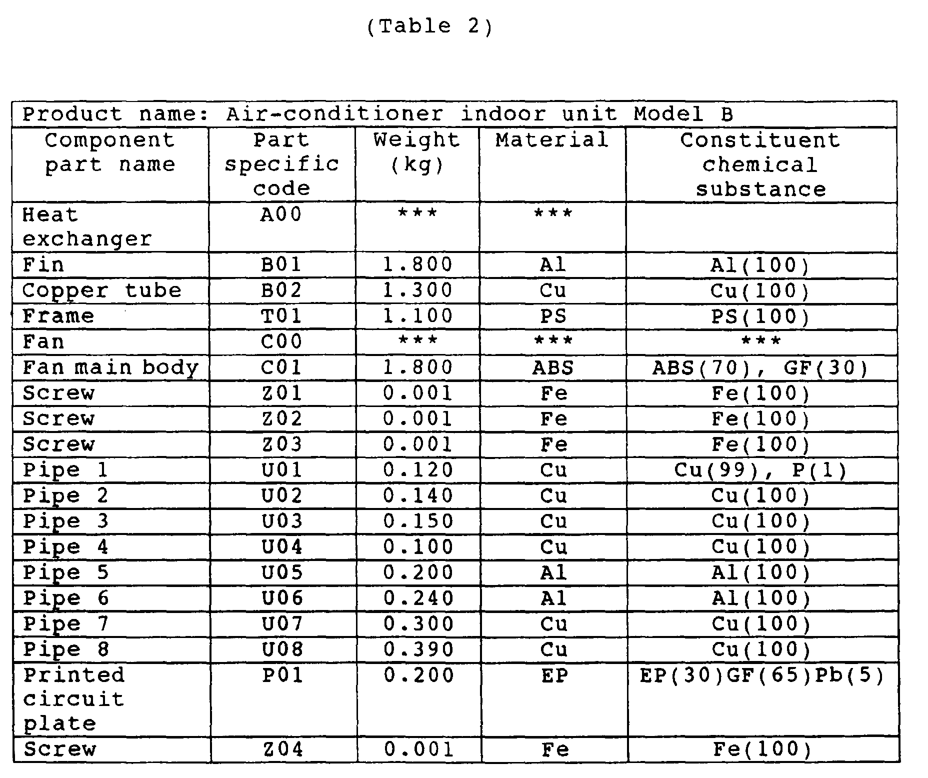

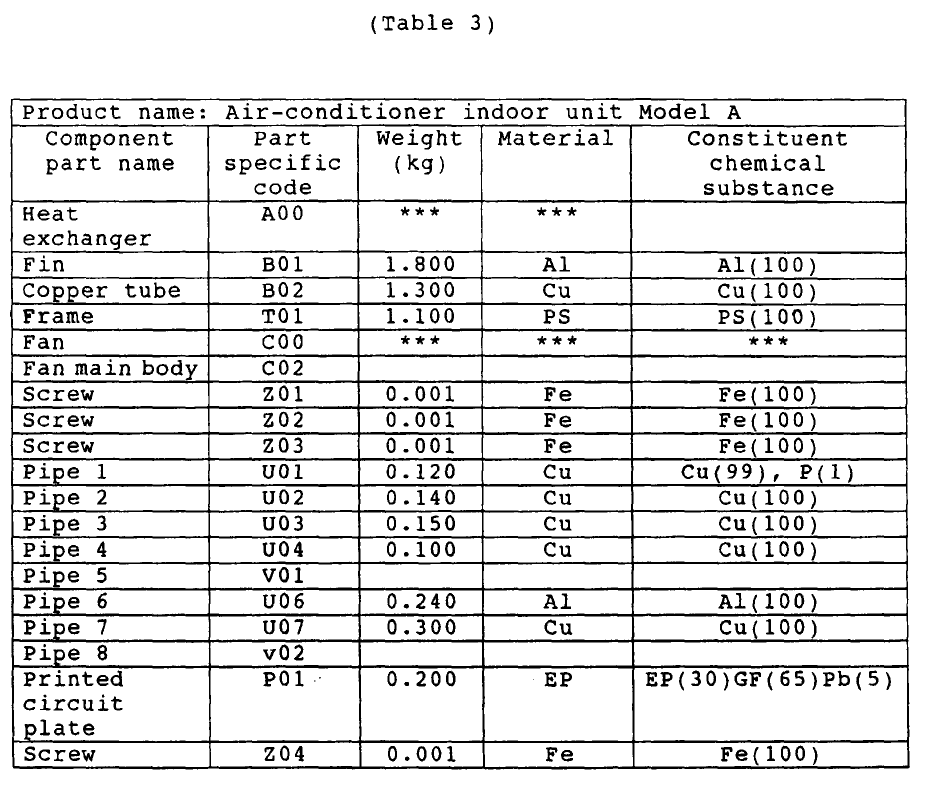

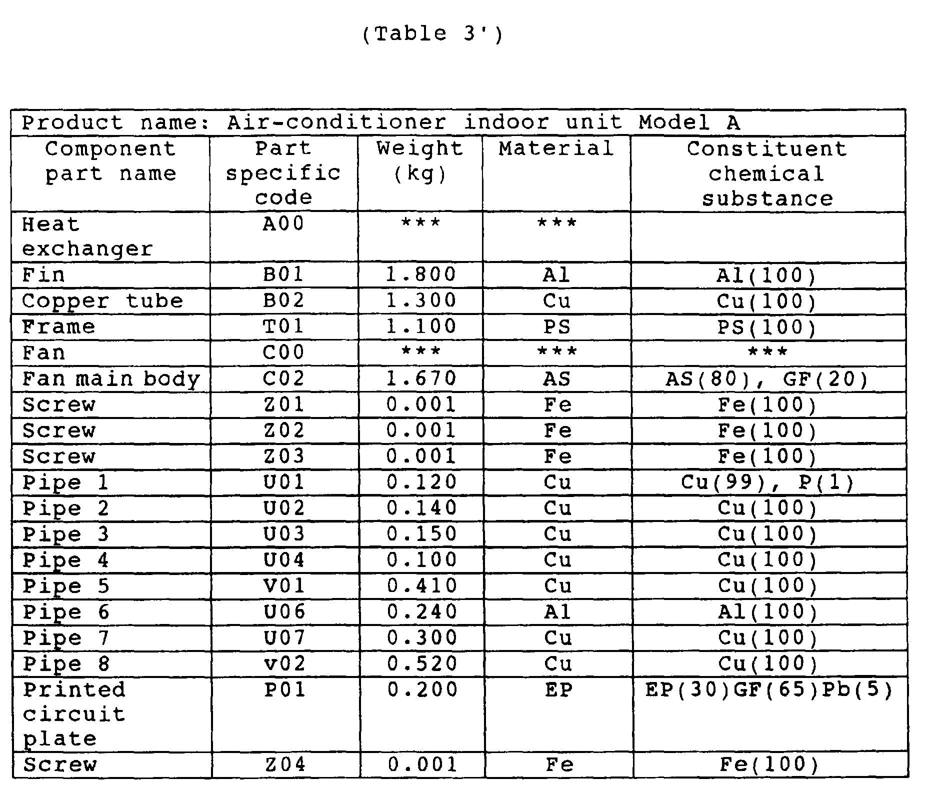

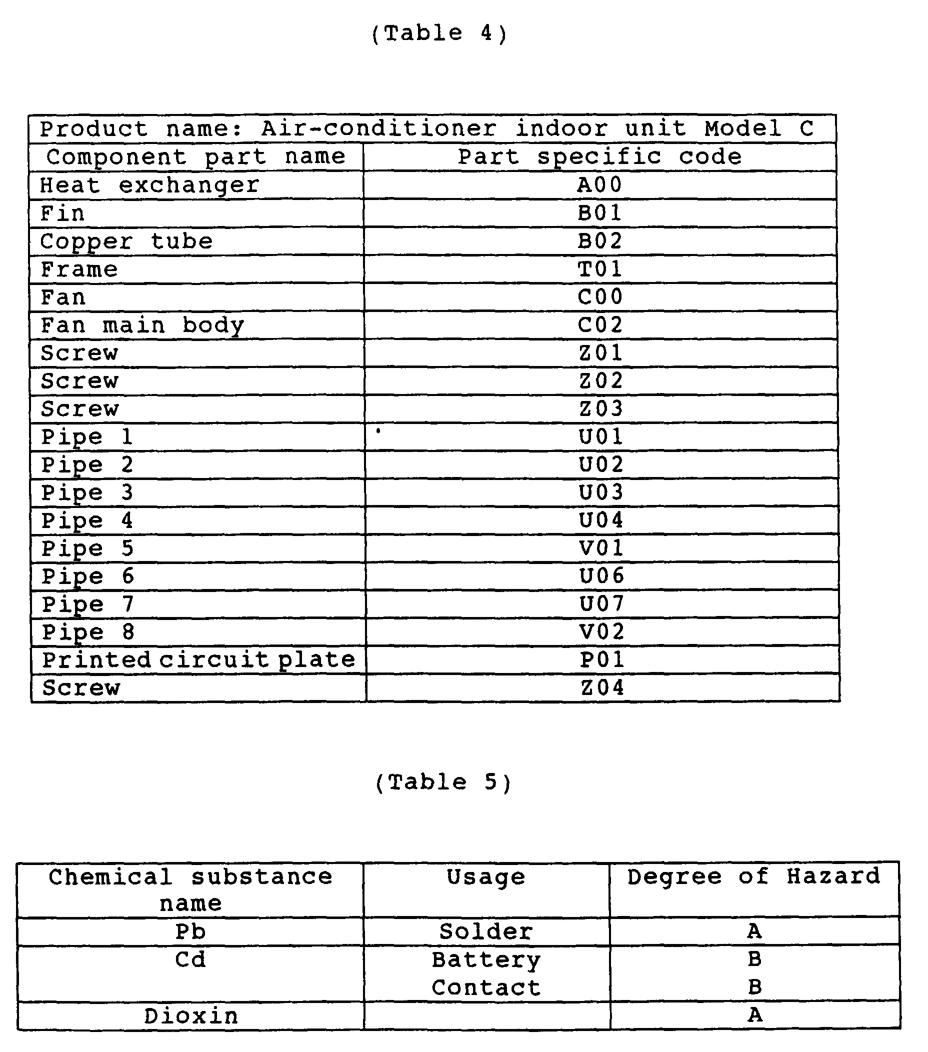

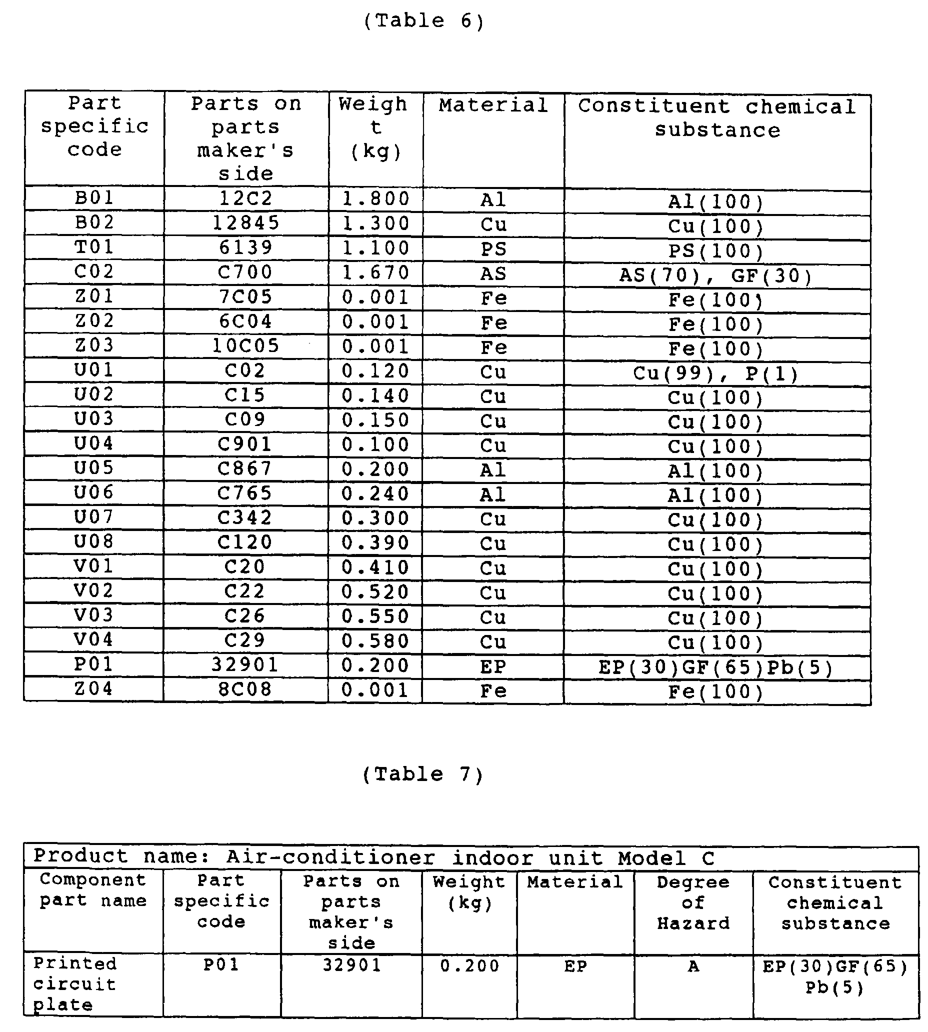

## Claims

1. An environmental assessment method, in designing a new product using a first database having at least a part specific code and a component part name for each part constituting an already designed product, and a second database having load information on environmental load chemical substance, comprising the steps of:
creating a bill of input parts for the new product by inputting the part specific code for each part constituting the new product, which is not registered into the first database;
retrieving the first database by the part specific code in the bill of input parts as a retrieval key to locate a matched code, reading information on the matched code from the first database, and filling at least a constituent chemical substance name in a blank column of a corresponding part in the bill of input parts to create a bill of parts for environmental assessment; and
retrieving the second database by the constituent chemical substance name of each part in the bill of parts for environmental assessment after filling data, as a retrieval key to assess environmental load of the new product.

2. An environmental assessment system, comprising:
a first database having at least a part specific code and a component part name for each part constituting an already designed product;
a second database having load information on environmental load chemical substance;
a bill of input parts having been input with the part specific code for each part constituting a new product, which is not registered into the first database; and
an operation unit for retrieving the first database by the part specific code in the bill of input parts as a retrieval key to locate a matched code, reading information on the matched code from the first database and filling at least a constituent chemical substance name in a blank column of the corresponding part in the bill of input parts to create a bill of parts for environmental assessment, and retrieving the second database by the constituent chemical substance name of each part in the bill of parts for environmental assessment after filling data, as a retrieval key to assess environmental load of the new product.

3. An environmental assessment method, in designing a new product using a second database having load information on environmental load chemical substance, and a third database having at least a part specific code and a constituent chemical substance name, comprising the steps of:
creating a bill of input parts for the new product by inputting the part specific code constituting the new product into a first database;
retrieving the third database by the part specific code in the bill of input parts as a retrieval key to locate a matched code, reading information on the matched code from the third database and filling at least the constituent chemical substance name in a blank column of a corresponding part in the bill of input parts to create a bill of parts for environmental assessment; and
retrieving the second database by the constituent chemical substance name of each part in the bill of parts for environmental assessment after filling data, as a retrieval key to assess environmental load of the new product.

4. An environmental assessment system, comprising:
a second database having load information on environmental load chemical substance;
a third database having at least a part specific code and a constituent chemical substance name;
a bill of input parts for a new product created by inputting the part specific code of each part constituting the new product into a first database; and
an operation unit for retrieving the third database by the part specific code in the bill of input parts as a retrieval key to locate a matched code, reading information on the matched code from the third database and filling at least the constituent chemical substance name in a blank column of a corresponding part in the bill of input parts to create a bill of parts for environmental assessment, and
retrieving the second database by the constituent chemical substance name of each part in the bill of parts for environmental assessment after filling data, as a retrieval key to assess environmental load of the new product.

5. The environmental assessment system according to claim 2 or 4, wherein the output of the environmental assessment system is displayed in a table format, the parts containing at least the environmental load chemical substance in this table being identified by color, density or flash.

6. The environmental assessment system according to claim 2 or 4, wherein the output of the environmental assessment system is displayed on design drawings, the parts containing the environmental load chemical substance being identified by color, density or flash.

7. The environmental assessment system according to claim 6, wherein the environmental assessment is displayed on the design drawings, while being linked with a CAD system.

8. The environmental assessment method according to claim 1 or 3, comprising creating a bill of parts for environmental assessment by filling at least the constituent chemical substance name in a blank column of a corresponding part in the bill of input parts via a network from outside, by using the part specific code in the bill of input parts created as a retrieval key.

9. The environmental assessment method according to claim 3, in conducting the environmental assessment of waste matter in dismantling, further comprising:
connecting an operation unit for assessing the environmental load of the product with the first database, the second database and the third database via a network; and
retrieving the second database via the network by the constituent chemical substance name of each part as a retrieval key to assess the environmental load of the product.

10. The environmental assessment method according to any one of claims 5 to 7, in conducting the environmental assessment of waste matter in dismantling, further comprising assessing environmental load by reading the information identified for the parts containing at least the environmental load chemical substance via a network from outside.

11. The environmental assessment system according to claim 4, wherein the information on at least any one of the first database, the second database and the third database can be read or changed via a network from outside.
